# EUROPÄISCHE PATENTSCHRIFT

(11) **EP 4 119 827 B1**
(45) Veröffentlichungstag und Bekanntmachung des Hinweises auf die Patenterteilung: **29.01.2025**
(21) Anmeldenummer: 21184966.6
(22) Anmeldetag: 12.07.2021
(51) Int. Cl.: H01F 7/06, H01F 7/08, H01F 7/18, F16K 37/00, F16K 31/06, G01D 5/14, H01F 7/128

(54) **ENDLAGENSENSOR FÜR EIN MAGNETVENTIL**
END POSITION SENSOR FOR SOLENOID VALVE
CAPTEUR DE FIN DE COURSE POUR UN ÉLECTROVANNE

(43) Veröffentlichungstag der Anmeldung: 18.01.2023
(73) Patentinhaber: GSR Ventiltechnik GmbH & Co. KG, 32602 Vlotho (DE)
(72) Erfinder: REIN, Igor, 32457 Porta Westfalica (DE)
(74) Vertreter: Brinkmann & Partner

(56) Entgegenhaltungen:
- EP-B1- 1 213 521
- CN-A- 109 642 808
- US-A- 5 818 223
- US-A1- 2007 029 996
- US-B2- 10 254 103
- US-B2- 7 628 378

## Beschreibung

Die Erfindung betrifft ein Magnetventil mit den Merkmalen nach dem Oberbegriff von Anspruch 1.

Endlagensensoren im Allgemeinen sowie Magnetventile mit einem Endlagensensor im Speziellen sind aus dem Stand der Technik an sich gut bekannt, weshalb es eines gesonderten druckschriftlichen Nachweises an dieser Stelle nicht bedarf.

Endlagensensoren sind beispielsweise aus der US 5 818 223 A und der US 10 254 103 B2 bekannt. Dabei betrifft die US 5 818 223 A einen berührungsfreien Drehpositionssensor, der über einen Dauermagneten einerseits sowie über ein damit zusammenwirkendes magnetisches Fühlerelement verfügt, wobei die Ausrichtung des Fühlerelements in Relation zum Magnetfeld des Magneten einen Rückschluss auf die Position des Fühlerelements zulässt. Die US 10 254 103 B2 betrifft indes einen Magnetfeldsensor, der einen Dauermagneten, ein erstes Magnetfelderfassungselement und ein zweites Magnetfelderfassungselement aufweist, wobei die beiden Magnetfelderfassungselemente in besonderer Weise geometrisch zueinander ausgerichtet sind.

Ein Magnetventil typischer Bauform verfügt zur Ventilschaltung über einen elektromagnetischen Antrieb. Dabei kann zwischen zwei möglichen Ventilstellungen unterschieden werden, und zwar zwischen der geöffneten Stellung einerseits und der geschlossenen Stellung andererseits.

Die geschlossene Ventilstellung ergibt sich typischerweise infolge der Einwirkung eines mechanischen Rückstellelements, das eine Ventildichtung gegen einen Ventilsitz drückt. Zur Umschaltung in die geöffnete Ventilstellung ist der elektromagnetische Antrieb zu bestromen, infolgedessen die Ventildichtung entgegen der auf sie einwirkenden mechanischen Rückstellkraft verfährt, so dass der Ventilsitz freigegeben wird.

Es besteht ein Interesse daran, die von einem Magnetventil eingenommene Stellung zu erfassen, mithin zu detektieren, ob sich das Magnetventil in der geschlossenen oder in der geöffneten Stellung befindet. Hierzu dient ein Endlagensensor, der dazu ausgerüstet ist, die Stellung eines Magnetventils sensieren zu können.

Gemäß einer ersten vorbekannten Bauform verfügt ein Endlagensensor über Endschalter.

Diese schalten je nach Stellung des Ventils. Von Nachteil dieser vorbekannten Konstruktion ist, dass keine geschlossene Bauweise des Ventils möglich ist, da der mechanische Zugriff auf den Ventilanker durch die Endschalter einen Durchbruch in dem Ventilgehäuse erforderlich macht. Dies kann auch im bestimmungsgemäßen Verwendungsfall zu Undichtigkeiten führen. Ferner ergibt sich zwangsläufig eine wenig kompakte Bauform.

Gemäß einer weiteren aus dem Stand der Technik bekannten Ausführungsform wird die sich im Bestromungsfall des elektromagnetischen Antriebs ergebende Stromkennlinie ausgewertet. Es ist so eine sehr präzise Sensierung der Ventilstellung ermöglicht. Von Nachteil dieser vorbekannten Bauform ist allerdings, dass die Ventilstellung nicht direkt, sondern nur indirekt über die Stromabnahme des elektromagnetischen Antriebs ermittelt wird. Es besteht mithin letztendlich keine Gewissheit darüber, ob die anhand der Stromkennlinie vermutete Ventilstellung der tatsächlichen Ventilstellung entspricht. Darüber hinaus bedarf es für die Auswertung der Stromkennlinie eines Sensors, der vergleichsweise kompliziert aufgebaut und damit teuer ist.

EP 1 213 521 B1 offenbart ein Magnetventil gemäß dem Oberbegriff des Anspruchs 1.

Es ist deshalb ausgehend vom Vorbeschriebenen die **Aufgabe** der Erfindung, einen Endlagensensor für ein Magnetventil vorzuschlagen, der konstruktionsbedingt bei einer gleichzeitig einfachen Handhabung eine sichere Erfassung einer Ventilstellung ermöglicht. Zur **Lösung** dieser Aufgabe wird mit der Erfindung ein Magnetventil mit den Merkmalen nach Anspruch 1 vorgeschlagen

Das erfindungsgemäße Magnetventil verfügt über einen Endlagensensor mit einem Gehäuse, das ein Magnetfeldübertragungsmittel beherbergt. Im bestimmungsgemäßen Verwendungsfall des Magnetventils bildet sich durch das Anlegen einer Spannung an die Elektromagnetspule des elektromagnetischen Antriebs ein Magnetfeld aus, das zu einer Aufmagnetisierung des Magnetfeldübertragungsmittels führt. Dieses neu entstandene Magnetfeld des Magnetfeldübertragungsmittels kann mittels des von der Steuerungsplatine bereitgestellten Sensorelements detektiert werden. Je nach Stärke des vom Magnetfeldübertragungsmittel ausgehenden Magnetfelds lässt sich die Stellung des Magnetventils erfassen. Dabei können in vorteilhafterweise nicht nur Magnetventilendstellungen, sondern auch -zwischenstellungen sensiert werden.

Zur Auswertung des Sensorsignals des Sensorelements verfügt die Steuerungsplatine des Weiteren über eine Auswerteelektronik. Diese gibt im bestimmungsgemäßen Verwendungsfall ein Auswertesignal ab, wobei eine Ausgabe beispielsweise als optische Anzeige oder in Form eines analogen Signals erfolgen kann. Die optische Anzeige kann beispielsweise mittels einer vom Endlagensensor bereitgestellten LED erfolgen.

Die Steuerungsplatine samt Sensorelement und Auswertelektronik ist ebenso wie das Magnetfeldübertragungsmittel innerhalb des vom Gehäuse bereitgestellten Gehäusevolumenraums angeordnet. Im Übrigen ist der Gehäusevolumenraum durch eine Vergussmasse ausgefüllt, in die die Steuerungsplatine eingebettet ist. Diese Ausgestaltung erbringt insbesondere den Vorteil, dass die Steuerungsplatine vor äußeren Einflüssen geschützt ist, insbesondere vor dem Eindringen von Flüssigkeiten und/oder Schmutzpartikeln oder sonstigen Verunreinigungen, was einen Einsatz des erfindungsgemäßen Magnetventils auch unter Wasser und/oder unter schmutzanfälligen Bedingungen ermöglicht. Das erfindungsgemäße Magnetventil bietet mithin ein weites Anwendungsspektrum, womit eine vereinfachte Handhabung gegeben ist.

Die Vergussmasse sorgt darüber hinaus für eine Verteilung von Wärme, die im Falle eines bestimmungsgemäßen Betriebs des Magnetventils entsteht, wobei eine Wärmeabfuhr über das mit der Vergussmasse in Kontakt stehende Gehäuse ermöglicht ist.

Im Vergleich zu einer Stellungserfassung mit Hilfe von Endschaltern wird darüber hinaus keine zusätzliche Spindel mit Dauermagneten benötigt, wodurch sich die Bauform erheblich verringert, was eine insgesamt kompakte Bauform des erfindungsgemäßen Magnetventils gestattet. Darüber hinaus ist eine geschlossene Bauform des erfindungsgemäßen Magnetventils gegeben, so dass im Unterschied zu einer offenen Bauformen Dichtigkeitsproblematiken nicht bestehen.

Das Magnetfeldübertragungsmittel des erfindungsgemäßen Magnetventils wirkt quasi als Verstärkungsmittel für das im Betriebsfall des Magnetventils entstehende Magnetfeld. Da sich die Magnetfeldstärke in Abhängigkeit der Ventilstellung ändert, kann mit Hilfe des Endlagensensors jede Ventilstellung erfasst und ausgegeben werden. Dabei ermöglicht es die nach der Erfindung vorgesehene Erfassung des durch eine Aufmagnetisierung des Magnetfeldübertragungsmittels entstehenden Magnetfelds geringste Positionsänderungen des Magnetventils erkennen zu können. Damit können Hübe unter 2 mm, vorzugsweise unter 1 mm, noch mehr bevorzugt unter 0,5 mm und am meisten bevorzugt bis 0,2 mm sicher detektiert und ausgewertet werden.

Die sich dank der Vergussmasse ergebende Wärmeabfuhr im Betriebsfall gestattet einen Einsatz des erfindungsgemäßen Magnetventils in einem Temperaturbereich zwischen - 40°C und 150°C. Dabei ist gleichzeitig eine Beständigkeit gegenüber unterschiedlichen Umgebungseinflüssen gewährleistet, so dass für das erfindungsgemäße Magnetventil ein weites Anwendungsspektrum gegeben ist.

Insgesamt wird mit der erfindungsgemäßen Konstruktion ein Magnetventil vorgeschlagen, das einfach in der Handhabung ist, eine sichere Anwendung ermöglicht, eine kompakte Bauform bietet und bei dem darüber hinaus auch kleinste Hübe zuverlässig sensiert werden können. Dabei ist das erfindungsgemäße Magnetventil insgesamt einfach im Aufbau und damit preisgünstig in der Herstellung.

Gemäß einem weiteren Merkmal der Erfindung ist vorgesehen, dass das Magnetfeldübertragungsmittel nach Art einer Scheibe ausgebildet ist und eine zur Innenkontur des Gehäuses korrespondierende Außenkontur aufweist. Diese Ausgestaltung des Magnetfeldübertragungsmittels ermöglicht eine einseitig offene Gehäuseausgestaltung, da das Magnetfeldübertragungsmittel im endmontierten Zustand das Gehäuse nach Art eines Deckels verschließt. Dabei liegen das Gehäuse und das Magnetfeldübertragungsmittel mit ihren Konturen unter Ausbildung eines Kontakts aneinander, womit zugleich hinsichtlich der Vergussmasse eine vergussmassendichte Anordnung von Magnetfeldübertragungsmittel und Gehäuse gegeben ist.

Gemäß einem weiteren Merkmal der Erfindung ist vorgesehen, dass das Magnetfeldübertragungsmittel vom Gehäuse positionssicher aufgenommen ist. Hierdurch ist eine gleichbleibende und definierte Abstandshaltung zwischen Magnetfeldübertragungsmittel und dem von der Steuerungsplatine bereitgestellten Sensorelements sichergestellt. Zur positionssicheren Aufnahme des Magnetfeldübertragungsmittels durch das Gehäuse kann beispielsweise vorgesehen sein, dass das Magnetfeldübertragungsmittel in das Gehäuse eingepresst ist.

Gemäß einem weiteren Merkmal der Erfindung ist vorgesehen, dass das Magnetfeldübertragungsmittel an einem gehäuseseitigen Anschlag anliegt. Hierdurch wird eine exakte Ausrichtung des Magnetfeldübertragungsmittels in Relation zum Gehäuse sichergestellt.

Gemäß einem weiteren Merkmal der Erfindung ist vorgesehen, dass das Magnetfeldübertragungsmittel zwei Durchgangsbohrungen aufweist. Diese dienen dazu, im Nachgang einer Montage von Steuerungsplatine und Magnetfeldübertragungsmittel den restlichen vom Gehäuse bereitgestellten Volumenraum mit Vergussmasse auszufüllen. Dabei gelangt über die eine der beiden Durchgangsbohrungen Vergussmasse in das Gehäuseinnere und über die zweite Durchgangsbohrung kann die hierdurch verdrängte Luft aus dem Gehäuse austreten.

Gemäß einem weiteren Merkmal der Erfindung ist vorgesehen, dass das Magnetfeldübertragungsmittel eine Schnittstelle zur Anordnung an einen Gegenkern des Magnetventils aufweist. Hierdurch ist eine in einfacher Weise durchzuführende Montage zur bestimmungsgemäßen Anordnung des Endlagensensors am Magnetventil gegeben. Zudem ist eine definierte Lage zwischen Gegenkern und Sensor sichergestellt, was die bestimmungsgemäße Ausbildung eines Magnetfelds im Magnetfeldübertragungsmittel unterstützt.

Gemäß einem weiteren Merkmal der Erfindung ist vorgesehen, dass die Schnittstelle eine Gewindebohrung ist. Dies erlaubt eine auswechselbare Anordnung des Sensors am Magnetventil, was insbesondere im Defektfall einen Austausch des Sensors oder des Magnetventils in einfacher Weise gestattet. Zudem hat die lösbare Anordnung des Sensors am Magnetventil den Vorteil, dass der Sensor als optionales Bauelement zur Verfügung gestellt werden kann, benutzerseitig also die Wahl besteht, das Magnetventil mit oder ohne Sensor verwenden zu können.

Gemäß einem weiteren Merkmal der Erfindung ist vorgesehen, dass die Steuerungsplatine an einem gehäuseseitigen Anschlag anliegt. Hierdurch wird eine sichere Lagepositionierung der Steuerungsplatine in Relation zum Gehäuse sichergestellt. Da auch das Magnetfeldübertragungsmittel in Relation zum Gehäuse in eine definierte Position gebracht ist, ergibt sich im Ergebnis eine definierte Beabstandung zwischen Steuerungsplatine und Magnetfeldübertragungsmittel.

Gemäß einem weiteren Merkmal der Erfindung ist vorgesehen, dass die Steuerungsplatine mit einem Signalübertragungsmittel ausgerüstet ist. Dieses Signalübertragungsmittel dient dazu, im bestimmungsgemäßen Verwendungsfall ein von der Auswerteelektronik erzeugtes Signal auszugeben und/oder weiterleiten zu können.

Bei dem Signalübertragungsmittel handelt es sich gemäß einem weiteren Merkmal der Erfindung um einen durch eine Gehäuseöffnung von außen zugänglichen Stecker. An diesem kann im bestimmungsgemäßen Verwendungsfall zur Ausbildung einer kommunikationstechnischen Verbindung ein Signalübertragungskabel mit einem entsprechend ausgebildeten Gegenstecker angeschlossen werden.

Gemäß einem weiteren Merkmal der Erfindung ist vorgesehen, dass die Steuerungsplatine unter Zwischenordnung des Steckers an dem gehäuseseitigen Anschlag anliegt. Demnach findet keine direkte Anordnung der Steuerungsplatine am Anschlag des Gehäuses statt, sondern unter Zwischenordnung des Steckers. Es ist so ein insgesamt kompakter Aufbau gegeben und zudem sichergestellt, dass die Steuerungsplatine selbst keinerlei Kontakt zur Innenwandung des Gehäuses hat, was nach einem Einbringen der Vergussmasse den Vorteil mit sich bringt, dass die Steuerungsplatine vollständig von der Vergussmasse umgeben ist, in diese mithin eingebettet ist. Hierdurch wird ein vollständiger Schutz der Steuerungsplatine gegenüber äußeren Einflüssen sichergestellt.

Gemäß einem weiteren Merkmal der Erfindung ist vorgesehen, dass das Sensorelement magnetfeldübertragungsmittelseitig von der Steuerungsplatine bereitgestellt ist. Es ist so ein definierter Abstand zwischen Magnetfeldübertragungsmittel und Sensorelement gegeben, wobei das Sensorelement dem Magnetfeldübertragungsmittel direkt gegenüberliegend angeordnet ist. Im endmontierten Zustand befindet sich im Volumenraum zwischen Magnetfeldübertragungsmittel und Sensorelement lediglich Vergussmasse, was eine optimierte Detektion eines vom Magnetfeldübertragungsmittel erzeugten Magnetfelds durch das Sensorelement sicherstellt.

Bei dem Sensorelement handelt es sich gemäß einem weiteren Merkmal der Erfindung um einen Hall-Sensor. Eine effektive, sichere und reproduzierbare Magnetfelderfassung durch das Sensorelement ist so sichergestellt.

Für eine Montage des erfindungsgemäßen Magnetventils ist zunächst der Stecker samt Steuerungsplatine im Gehäuse zu positionieren. Alsdann ist das scheibenförmig ausgebildete Magnetfeldübertragungsmittel in das Gehäuse einzubringen, wobei das einseitig offene Gehäuse im endmontierten Zustand nach Art eines Deckels durch das Magnetfeldübertragungsmittel verschlossen ist. Das vom Gehäuse noch beherbergte Restvolumen ist alsdann mit Vergussmasse auszufüllen, zu welchem Zweck über eine der beiden Durchgangsbohrungen des Magnetfeldübertragungsmittels flüssige Vergussmasse in das Gehäuse einzubringen ist. Sobald das vom Gehäuse noch bereitgestellte Restvolumen sowie die Durchgangsbohrungen im Magnetfeldübertragungsmittel vollständig mit Vergussmasse ausgefüllt sind, ist der Befüllvorgang beendet und die Vergussmasse kann nunmehr aushärten.

Bei der Vergussmasse handelt es sich bevorzugterweise um ein selbstaushärtendes Kunststoffmaterial.

Weitere Merkmale und Vorteile der Erfindung ergeben sich aus der nachfolgenden Beschreibung anhand der Figuren. Dabei zeigen:
- Fig. 1: in schematischer Schnittdarstellung ein Magnetventil mit einem daran angeordneten Endlagensensor nach der Erfindung;
- Fig. 2: in schematischer Schnittdarstellung den Endlagensensor und
- Fig. 3: in schematisch perspektivischer Schnittdarstellung den Endlagensensor.

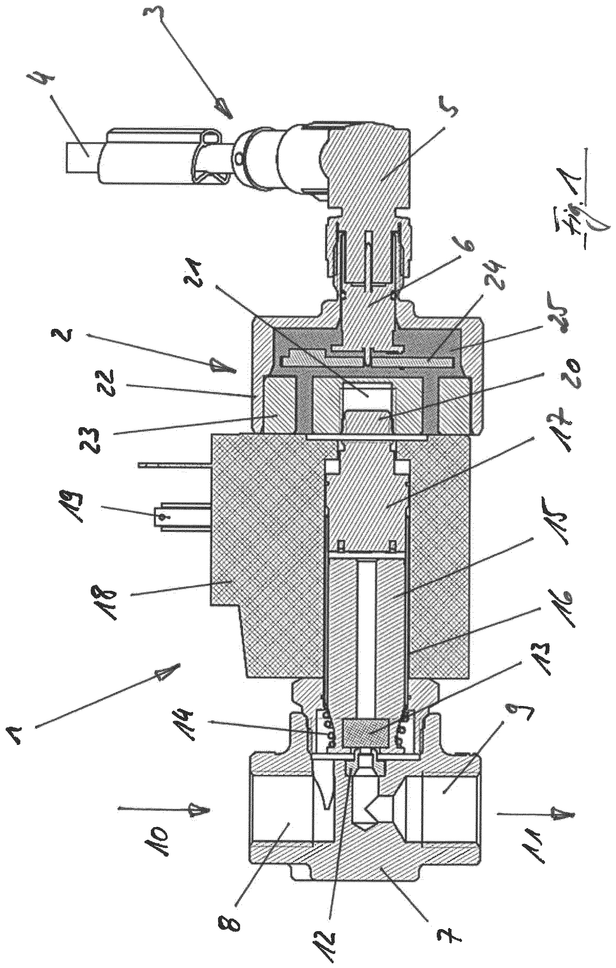

Fig. 1 lässt in schematischer Schnittdarstellung ein Magnetventil 1 gemäß einer typischen Bauform erkennen. Dieses ist mit einem Endlagensensor 2 ausgerüstet. Zwecks Signalübertragung ist der Endlagensensor 2 an eine kommunikationstechnische Verbindung 3 angeschlossen.

Das Magnetventil 1 verfügt in an sich bekannter Weise über eine Ventilarmatur 7, die einen Eintritt 8 und einen Austritt 9 bereitstellt. Ein Medienstrom gelangt über den Eintritt 8 in Entsprechung des Pfeils 10 in die Ventilarmatur 7 und wird bei geöffnetem Ventilsitz 12 in Entsprechung des Pfeils 11 über den Austritt 9 abgegeben.

Der Ventilsitz 12 wirkt mit einer Ventildichtung 13 zusammen. In der geschlossenen Stellung des Ventils, wie sie in Fig. 1 dargestellt ist, liegt die Ventildichtung 13 am Ventilsitz 12 an und verschließt diesen. Das Magnetventil 1 befindet sich in dieser Stellung der Ventildichtung 13 in der geschlossenen Stellung.

Die Ventildichtung 13 ist von einem in einem Tubus 16 geführten Anker 15 bereitgestellt.

Zusammen mit der Ventildichtung 13 kann sich der Anker 15 mit Bezug auf die Zeichnungsebene nach Fig. 1 nach links bzw. rechts bewegen.

In der gemäß Fig. 1 geschlossenen Stellung des Magnetventils 1 drückt eine Rückstellfeder 14 den Anker 15 zusammen mit der davon bereitgestellten Ventildichtung 13 mit Bezug auf die Zeichnungsebene nach Fig. 1 nach links, mithin gegen den Ventilsitz 12.

Das Magnetventil 1 verfügt des Weiteren über einen Gegenkern 17. Dieser steht in Wirkverbindung mit einer Elektromagnetspule 18, die über einen Anschluss 19 im Betriebsfall mit Strom beaufschlagt wird. Im Bestromungsfall entsteht im Gegenkern 17 ein Magnetfeld, wodurch der Anker 15 entgegen der Krafteinwirkung der Rückstellfeder 14 an den Gegenkern 17 gezogen wird, der Anker 15 sich mithin mit Bezug auf die Zeichnungsebene nach Fig. 1 nach rechts bewegt. Infolgedessen löst sich die Ventildichtung 13 vom Ventilsitz 12, womit dieser geöffnet wird. In dieser Stellung der Ventildichtung 13 befindet sich das Magnetventil 1 mithin in der geöffneten Stellung.

Zur Detektion der Ventilstellung dient der vorgesehene Endlagensensor 2.

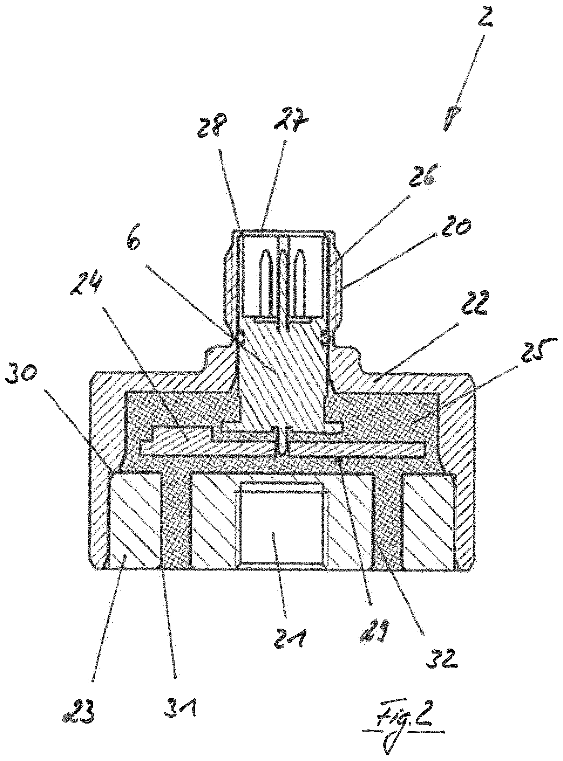

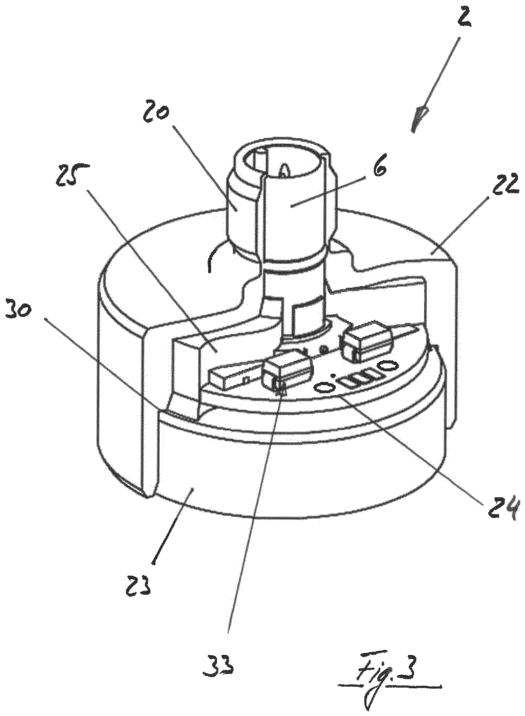

Wie sich insbesondere aus einer Zusammenschau der Fign. 2 und 3 ergibt, verfügt der Endlagensensor 2 über ein Gehäuse 22. Es sind ferner eine Steuerungsplatine 24 und ein Magnetfeldübertragungsmittel 23 vorgesehen. Sowohl die Steuerungsplatine 24 als auch das Magnetfeldübertragungsmittel 23 sind im endmontierten Zustand vom Gehäuse 22 beherbergt.

Das Magnetfeldübertragungsmittel 23 ist nach Art einer Scheibe ausgebildet und verschließt das einseitig offen ausgebildete Gehäuse 22 nach Art eines Deckels. Dabei liegt das Magnetfeldübertragungsmittel 23 zwecks positionsgenauer Anordnung innerhalb des Gehäuses 22 an einem gehäuseseitigen Anschlag 30 an, wie sich dies insbesondere aus der Darstellung nach Fig. 2 ergibt.

Das Magnetfeldübertragungsmittel 23 stellt zwei Durchgangsbohrungen 31 und 32 sowie eine Gewindebohrung 21 bereit.

Die Steuerungsplatine verfügt ihrerseits über ein Sensorelement 29 und eine Auswerteelektronik 33. Dabei ist das Sensorelement 29 magnetfeldübertragungsmittelseitig der Steuerungsplatine 24 bereitgestellt, wie sich dies ebenfalls insbesondere aus der Darstellung nach Fig. 2 ergibt.

Die Steuerungsplatine 24 ist des Weiteren mit einem Signalübertragungsmittel in der Ausgestaltung eines Steckers 6 ausgerüstet. Dieser kommt im endmontierten Zustand in einer von einem Gewindefortsatz 20 des Gehäuses 22 bereitgestellten Bohrung 26 zu liegen. Dabei liegt der Stecker 6 an einem gehäuseseitigen Anschlag 28 an und ist durch eine Gehäuseöffnung 27 hindurch zugänglich.

Zur Anordnung des Endlagensensors 2 am Magnetventil 1 dient die vom Magnetfeldübertragungsmittel 23 bereitgestellte Gewindebohrung 21, in die ein Gewindefortsatz 20 des Gegenkerns 17 eingreift, wie sich dies aus der Darstellung nach Fig. 1 ergibt.

Fig. 1 lässt des Weiteren erkennen, dass zum Anschluss der kommunikationstechnischen Verbindung 3 an den Stecker 6 ein in einem Kabel 4 mündender Stecker 5 vorgesehen ist, der zum Stecker 6 kompatibel ausgebildet ist.

Der vom Gehäuse 22 bereitgestellte Gehäusevolumenraum ist im Übrigen durch eine Vergussmasse 25 ausgefüllt. In diese Vergussmasse 25 ist die Steuerungsplatine 24 eingebettet, wie sich dies insbesondere aus der Darstellung nach Fig. 2 erkennen lässt. Dabei ist die Steuerungsplatine 24 allseitig von der Vergussmasse 25 umgeben, ist also innerhalb des Gehäuses 22 kontaktfrei zum Gehäuse angeordnet. Hierdurch ist ein sicherer Schutz der Steuerungsplatine 24 vor äußeren Einflüssen gegeben, auch vor Flüssigkeiten, womit das erfindungsgemäße Magnetventil (1) auch für einen Einsatz unter Wasser geeignet ist.

Zum Einbringen der Vergussmasse 25 in den Gehäusevolumenraum dienen die vom Magnetfeldübertragungsmittel 23 bereitgestellten Durchgangsbohrungen 31 und 32. Zur endfertigen Ausbildung des Endlagensensors ist durch die eine Durchgangsbohrung 31 bzw. 32 die noch flüssige Vergussmasse 25 in das Gehäuse 22 einzuführen. Die dabei verdrängte Luft kann über die andere Durchgangsbohrung 31 bzw. 32 ausströmen. Sobald der Gehäusevolumenraum sowie die beiden Durchgangsbohrungen 31 und 32 vollständig mit Vergussmasse 25 befüllt sind, ist der Befüllvorgang beendet, so dass dann im Nachfolgenden eine Aushärtung der Vergussmasse 25 stattfinden kann.

Die Funktionsweise des erfindungsgemäßen Magnetventils (1) ergibt sich wie folgt:
Im Bestromungsfall bildet sich in an sich bekannter Weise im Gegenkern 17 ein Magnetfeld aus. Dieses Magnetfeld führt zu einer Aufmagnetisierung des Magnetfeldübertragungsmittels 23. Es entsteht quasi ein neues Magnetfeld, welches vom Sensorelement 29 erfasst wird. Dabei ist die Stärke des Magnetfelds ein Maß für die Stellung des Ankers 15. Der Sensor 2 kann mithin nicht nur die geschlossene bzw. geöffnete Stellung des Magnetventils 1 erfassen, sondern auch Zwischenstellungen.

### Bezugszeichen

- 1: Magnetventil
- 2: Endlagensensor
- 3: kommunikationstechnische Verbindung
- 4: Kabel
- 5: Stecker
- 6: Stecker
- 7: Ventilarmatur
- 8: Eintritt
- 9: Austritt
- 10: Pfeil
- 11: Pfeil
- 12: Ventilsitz
- 13: Ventildichtung
- 14: Rückstellfeder
- 15: Anker
- 16: Tubus
- 17: Gegenkern
- 18: Elektromagnetspule
- 19: Anschluss
- 20: Gewindefortsatz
- 21: Gewindebohrung
- 22: Gehäuse
- 23: Magnetfeldübertragungsmittel
- 24: Steuerungsplatine
- 25: Vergussmasse
- 26: Bohrung
- 27: Gehäuseöffnung
- 28: Anschlag
- 29: Sensorelement
- 30: Anschlag
- 31: Durchgangsbohrung
- 32: Durchgangsbohrung
- 33: Auswerteelektronik

## Patentansprüche

1. Magnetventil mit einem Ventilsitz (12) und einer Ventildichtung (13), die von einem in einem Tubus (16) geführten Anker (15) bereitgestellt ist, sowie mit einer Elektromagnetspule (18) und einem damit in Wirkverbindung stehenden Gegenkern (17), wobei der Gegenkern (17) dazu eingerichtet ist, im Bestromungsfall der Elektromagnetspule (18) den Anker (15) zusammen mit der Ventildichtung (13) entgegen der Krafteinwirkung einer Rückstellfeder (14) anzuziehen, und mit einem Endlagensensor (2) mit einem Gehäuse (22), **gekennzeichnet durch** eine im Gehäuse (22) angeordnete Steuerungsplatine (24), die ein Sensorelement (29) und eine Auswerteelektronik (33) bereitstellt, und ein im Gehäuse (22) angeordnetes und zur Steuerungsplatine (24) definiert beabstandetes Magnetfeldübertragungsmittel (23), das eine Schnittstelle zur Anordnung an dem Gegenkern (17) aufweist, und das dazu eingerichtet ist, im Bestromungsfall der Elektromagnetspule (18) durch das Magnetfeld des Gegenkerns (17) aufmagnetisiert zu werden, wobei das Sensorelement (29) dazu eingerichtet ist, das Magnetfeld des Magnetfeldübertragungsmittels (23) zu detektieren und je nach Stärke des vom Magnetfeldübertragungsmittel (23) ausgehenden Magnetfeldes die Stellung des Magnetventils (1) zu erfassen, wobei der vom Gehäuse (22) bereitgestellte Gehäusevolumenraum im Übrigen durch eine Vergussmasse (25) ausgefüllt ist, in die die Steuerungsplatine (24) eingebettet ist.

2. Magnetventil nach Anspruch 1, **dadurch gekennzeichnet, dass** das Magnetfeldübertragungsmittel (23) nach Art einer Scheibe ausgebildet ist und eine zur Innenkontur des Gehäuses (22) korrespondierende Außenkontur aufweist.

3. Magnetventil nach Anspruch 1 oder 2, **dadurch gekennzeichnet, dass** das Magnetfeldübertragungsmittel (23) vom Gehäuse (22) positionssicher aufgenommen ist.

4. Magnetventil nach einem der vorhergehenden Ansprüche, **dadurch gekennzeichnet, dass** das Magnetfeldübertragungsmittel (23) an einem gehäuseseitigen Anschlag (30) anliegt.

5. Magnetventil nach einem der vorhergehenden Ansprüche, **dadurch gekennzeichnet, dass** das Magnetfeldübertragungsmittel (23) zwei Durchgangsbohrungen (31, 32) aufweist.

6. Magnetventil nach Anspruch 1, **dadurch gekennzeichnet, dass** die Schnittstelle eine Gewindebohrung (21) ist.

7. Magnetventil nach einem der vorhergehenden Ansprüche, **dadurch gekennzeichnet, dass** die Steuerungsplatine (24) an einem gehäuseseitigen Anschlag (28) anliegt.

8. Magnetventil nach einem der vorhergehenden Ansprüche, **dadurch gekennzeichnet, dass** die Steuerungsplatine (24) mit einem Signalübertragungsmittel ausgerüstet ist.

9. Magnetventil nach Anspruch 8, **dadurch gekennzeichnet, dass** das Signalübertragungsmittel ein durch eine Gehäuseöffnung (27) von außen zugänglicher Stecker (6) ist.

10. Magnetventil nach Anspruch 9, **dadurch gekennzeichnet, dass** die Steuerungsplatine (24) unter Zwischenordnung des Steckers (6) an dem gehäuseseitigen Anschlag (28) anliegt.

11. Magnetventil nach einem der vorhergehenden Ansprüche, **dadurch gekennzeichnet, dass** das Sensorelement (29) magnetfeldübertragungsmittelseitig von der Steuerungsplatine (24) bereitgestellt ist.

12. Magnetventil nach einem der vorhergehenden Ansprüche, **dadurch gekennzeichnet, dass** das Sensorelement (29) ein Hall-Sensor ist.

## Claims

1. Solenoid valve comprising a valve seat (12) and a valve seal (13) that is provided by an armature (15) guided within a tube (16) and having a solenoid coil (18) and a counter core (17) operatively connected to it, wherein the counter core (17) is configured, to attract the armature (15) together with the valve seal (13) against a force applied by a return spring (14) when the solenoid coil (18) is energized, and comprising an end position sensor (2) with a housing (22),
**characterized by**
a control board (24) that provides a sensor element (29) and evaluation electronics (33) and a magnetic field transmission means (23) arranged within the housing (22) and spaced in a defined manner from the control board (24), which magnetic field transmission means (23) has an interface for arrangement on the counter core (17) and is configured upon energization of the solenoid coil (17) to be magnetized by the magnetic field of the counter core (17), wherein the sensor element (29) is configured to detect the magnetic field of the magnetic field transmission means (23) and to detect the position of the solenoid valve (1) depending on the strength of the magnetic field emitted by the magnetic field transmission means (23), wherein, furthermore, the volume space provided by the housing (22) is filled with a potting compound (25) having the control board (24) embedded therein.

2. Solenoid valve according to claim 1, **characterized in that** the magnetic field transmission means (23) is designed in the manner of a disk and has an outer contour corresponding to the inner contour of the housing (22).

3. Solenoid valve according to claim 1 or 2, **characterized in that** the magnetic field transmission means (23) is accommodated by the housing (22) in a positionally safe manner.

4. Solenoid valve according to any one of the preceding claims, **characterized in that** the magnetic field transmission means (23) bears against a housing-side stop (30).

5. Solenoid valve according to any one of the preceding claims, **characterized in that** the magnetic field transmission means (23) includes two through-holes (31, 32).

6. Solenoid valve according to claim 1, **characterized in that** the interface is a threaded bore (21).

7. Solenoid valve according to any one of the preceding claims, **characterized in that** the control board (24) bears against housing-side stop (28).

8. Solenoid valve according to any one of the preceding claims, **characterized in that** the control board (24) is equipped with a signal transmission means.

9. Solenoid valve according to claim 8, **characterized in that** the signal transmission means is plug (6) that can be accessed from outside through a housing opening (27).

10. Solenoid valve according to claim 9, **characterized in that** the control board (24) bears against the housing side stop (28) with the interposition of the plug (6).

11. Solenoid valve according to any one of the preceding claims, **characterized in that** the sensor element (29) is provided on the side of the magnetic field transmission means by the control board (24).

12. Solenoid valve according to any one of the preceding claims, **characterized in that** the sensor element (29) is a Hall sensor.

## Revendications

1. Électrovanne comprenant un siège de soupape (12) et un joint de soupape (13) fournis par une armature (15) guidée à l'intérieur d'un tube (16) et comprenant une bobine de solénoïde (18) et un contre-noyau (17) relié de manière opérationnelle à celle-ci, le contre-noyau (17) étant configuré pour attirer l'armature (15) ainsi que le joint de soupape (13) contre une force appliquée par un ressort de rappel (14) lorsque la bobine de solénoïde (18) est alimentée, et comprenant un capteur de fin de course (2) prévu d'un boîtier (22),
**caractérisée par**
une carte de commande (24) qui fournit un élément capteur (29) et une électronique d'évaluation (33), et un moyen de transmission de champ magnétique (23) disposé à l'intérieur du boîtier (22) et espacé d'une manière définie de la carte de commande (24), ce moyen de transmission de champ magnétique (23) ayant une interface pour être disposé sur le contre-noyau (17) et étant configuré lors de l'excitation de la bobine de solénoïde (17) pour être magnétisé par le champ magnétique du contre-noyau (17), dans lequel l'élément capteur (29) est configuré pour détecter le champ magnétique du moyen de transmission de champ magnétique (23) et pour détecter la position de l'électrovanne (1) en fonction de l'intensité du champ magnétique émis par le moyen de transmission de champ magnétique (23), dans lequel, en outre, l'espace de volume fourni par le boîtier (22) est rempli d'un composé d'empotage (25) dans lequel est incorporée la carte de commande (24).

2. Electrovanne selon la revendication 1, **caractérisée en ce que** le moyen de transmission du champ magnétique (23) est conçu à la manière d'un disque et présente un contour extérieur correspondant au contour intérieur du boîtier (22).

3. Electrovanne selon la revendication 1 ou 2, **caractérisée en ce que** le moyen de transmission du champ magnétique (23) est logé dans le boîtier (22) d'une manière sûre en position.

4. Electrovanne selon l'une quelconque des revendications précédentes, **caractérisée en ce que** le moyen de transmission du champ magnétique (23) s'appuie sur une butée côté boîtier (30).

5. Electrovanne selon l'une quelconque des revendications précédentes, **caractérisée en ce que** le moyen de transmission du champ magnétique (23) comporte deux trous de passage (31, 32).

6. Electrovanne selon la revendication 1, **caractérisée en ce que** l'interface est un alésage fileté (21).

7. Electrovanne selon l'une quelconque des revendications précédentes, **caractérisée en ce que** la carte de commande (24) s'appuie sur la butée côté boîtier (28).

8. Electrovanne selon l'une quelconque des revendications précédentes, **caractérisée en ce que** la carte de commande (24) est équipée d'un moyen de transmission de signal.

9. Electrovanne selon la revendication 8, **caractérisée en ce que** le moyen de transmission de signal est une fiche (6) accessible de l'extérieur par une ouverture du boîtier (27).

10. Electrovanne selon la revendication 9, **caractérisée en ce que** la carte de commande (24) s'appuie sur la butée côté boîtier (28) avec l'interposition de la fiche (6).

11. Electrovanne selon l'une quelconque des revendications précédentes, **caractérisée en ce que** l'élément capteur (29) est prévu du côté du moyen de transmission du champ magnétique par la carte de commande (24).

12. Electrovanne selon l'une quelconque des revendications précédentes, **caractérisée en ce que** l'élément capteur (29) est un capteur à effet Hall.
